**Europäisches Patentamt**

**European Patent Office**

**Office européen des brevets**

(19)

(11) Numéro de publication: **0 313 424 B1**

(12) **FASCICULE DE BREVET EUROPEEN**

(45) Date de publication du fascicule du brevet:
08.08.90

(51) Int. Cl.⁵: **B60J 5/06**

(21) Numéro de dépôt: 88402435.7

(22) Date de dépôt: 27.09.88

(54) Dispositif d'ouverture latérale d'un véhicule utilitaire à pavillon surélevé.

(30) Priorité: 21.10.87 FR 8714526

(43) Date de publication de la demande:
26.04.89 Bulletin 89/17

(45) Mention de la délivrance du brevet:
08.08.90 Bulletin 90/32

(84) Etats contractants désignés:
DE GB IT

(56) Documents cités:
FR-A- 2 367 631
US-A- 3 247 892

(73) Titulaire: AUTOMOBILES PEUGEOT, 75, avenue de la Grande Armée, F-75116 Paris(FR)
Titulaire: AUTOMOBILES CITROEN, 62 Boulevard Victor-Hugo, F-92200 Neuilly-sur-Seine(FR)

(72) Inventeur: Froumajou, Armand, 11 bis, rue Docteur Laennec, F-95520 Osny(FR)

(74) Mandataire: Bouget, Lucien et al, Cabinet Lavoix 2, Place d'Estienne d'Orves, F-75441 Paris Cédex 09(FR)

**Description**

L'invention concerne un dispositif d'ouverture latérale d'un véhicule utilitaire à pavillon surélevé.

On connaît des véhicules utilitaires du type fourgon comportant une porte latérale coulissante (voir par exemple FR-A 2 367 631). Ces véhicules peuvent également comporter un pavillon de grande hauteur permettant de les surélever et d'augmenter ainsi leur capacité et leurs possibilités, en ce qui concerne le chargement de colis de grande hauteur.

Le pavillon est alors réalisé sous la forme d'une pièce rigide creuse constituée par une tôle métallique fortement emboutie ou une coque plastique de grande hauteur.

Les portes arrières du véhicule sont généralement d'une hauteur suffisante pour permettre de dégager un espace de chargement s'étendant depuis le plancher du véhicule jusqu'à la partie supérieure du pavillon qui comporte une découpe correspondante.

Jusqu'ici, dans ce type de véhicule, on n'a pas envisagé l'utilisation de portes latérales coulissantes d'une hauteur accrue. Les colis de grande hauteur chargés par l'arrière du véhicule ne peuvent donc être déchargés latéralement ce qui limite les possibilités du véhicule.

Les portes latérales coulissantes de tels véhicules comportent des galets de roulement associés à des rails de guidage longitudinaux qui sont situés à différents niveaux suivant la hauteur du véhicule. Le rail supérieur de guidage d'une porte latérale coulissante d'un véhicule à pavillon surélevé est généralement situé au voisinage du niveau inférieur du pavillon, la porte ayant les mêmes dimensions que dans le cas d'un véhicule non surélevé.

D'autre part, il ne semble pas intéressant pour des raisons économiques d'envisager la conception de portes coulissantes spécifiques de hauteur accrue. En effet, la fabrication de telles portes nécessite des investissements élevés, pour une production en quantités limitées. Les coûts de production sont en conséquence considérablement accrus.

En outre, la manoeuvrabilité d'une porte coulissante diminue lorsque les dimensions de cette porte et en particulier sa hauteur augmente, si bien que dans le cas de portes coulissantes dégageant un passage de grande hauteur sur la paroi latérale d'un véhicule, les difficultés d'utilisation et d'entretien de la porte coulissante limitent fortement l'intérêt de cette solution.

Le but de l'invention est donc de proposer un dispositif d'ouverture latérale d'un véhicule utilitaire à pavillon surélevé, comportant une porte montée coulissante dans une paroi latérale du véhicule en-dessous du pavillon, grâce à des moyens de roulement associés à des rails de guidage longitudinaux situés à différents niveaux suivant la hauteur du véhicule, ce dispositif permettant de dégager une ouverture de grande hauteur dans la paroi latérale du véhicule, tout en évitant l'utilisation d'une porte coulissante d'une hauteur accrue par rapport aux dimensions habituelles retenues dans la construction des véhicules utilitaires.

Dans ce but, le rail supérieur de guidage de la porte coulissante est disposé à la partie supérieure du pavillon, le moyen de roulement de la porte coulissante associé au rail supérieur est fixé à l'extrémité supérieure d'un support sensiblement vertical solidaire de la porte coulissante par son extrémité inférieure et disposé de façon adjacente à la paroi latérale vers l'intérieur du véhicule et le dispositif comporte de plus un volet monté pivotant sur le véhicule autour d'un axe de direction longitudinale situé dans son plan et placé à la partie supérieure du pavillon, susceptible d'être déplacé par pivotement entre une position de fermeture où le volet se trouve dans le plan de la paroi latérale entre la partie supérieure de la porte coulissante et la partie supérieure du pavillon et une position d'ouverture où le volet est écarté vers l'extérieur du plan de la paroi latérale du véhicule.

Des modes particuliers de réalisation sont indiqués dans les revendications dépendantes 2 à 5.

Afin de bien faire comprendre l'invention, on va maintenant décrire, à titre d'exemple non limitatif, un dispositif d'ouverture latérale suivant l'art antérieur et un dispositif d'ouverture latérale suivant l'invention et suivant deux variantes de réalisation.

La figure 1 est une vue en coupe verticale d'une paroi latérale de véhicule comportant un dispositif d'ouverture suivant l'art antérieur.

La figure 2 est une vue en coupe verticale d'une paroi latérale d'un véhicule comportant un dispositif d'ouverture suivant l'invention et suivant une première variante de réalisation.

La figure 3 est une vue en coupe verticale d'une paroi latérale d'un véhicule comportant un dispositif d'ouverture suivant l'invention et suivant une seconde variante de réalisation.

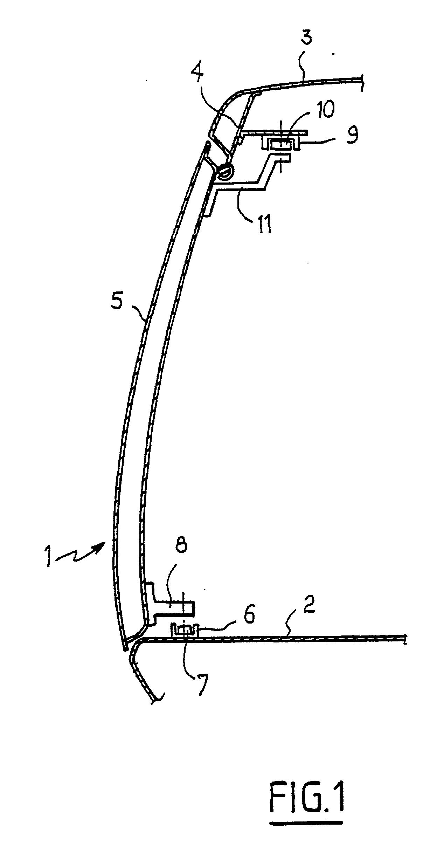

Sur la figure 1, on voit la partie latérale d'un véhicule comportant une paroi latérale désignée de manière générale par le repère 1, un plancher 2 et un pavillon 3 constituant la partie supérieure du véhicule solidaire de la structure supérieure 4 de la paroi latérale 1. Entre le plancher 2 et la structure supérieure 4, la paroi 1 présente une ouverture de chargement ou de déchargement qui peut être fermée par une porte coulissante 5.

Le guidage et le support de la porte 5 sont assurés grâce à des rails longitudinaux et à des dispositifs à galets solidaires de la porte 5.

Un premier rail longitudinal 6 est monté sur le plancher 2 ; dans le rail 6 est engagé un dispositif à galets 7 solidaire de la partie inférieure de la porte coulissante 5 par l'intermédiaire d'un support 8.

Un second rail longitudinal 9 est fixé sur une partie de la structure supérieure 4 de la paroi latérale 1, en saillie vers l'intérieur du véhicule ; un dispositif de guidage à galets 10 engagé dans le rail 9 est fixé à l'extrémité d'un support 11 solidaire de la partie supérieure de la paroi coulissante 5.

Dans le cas d'un véhicule utilitaire comportant un pavillon de hauteur limitée, un dispositif d'ouverture suivant l'art antérieur constitué par une simple porte coulissante permet donc de dégager un espace de chargement ou de déchargement dont la hauteur est très peu inférieure à la hauteur totale de la paroi latérale 1.

Le support et le guidage de la porte coulissante sont complétés par un troisième rail horizontal et longitudinal disposé à un niveau intermédiaire entre le niveau des rails 6 et 9 et fixé sur un panneau constituant une partie fixe de la paroi latérale 1, à l'arrière de l'ouverture dont la porte coulissante 5 assure l'obturation. Ce troisième rail n'a pas été représenté sur la figure 1 qui est une vue en coupe de la paroi latérale au niveau de l'ouverture fermée par la porte 5.

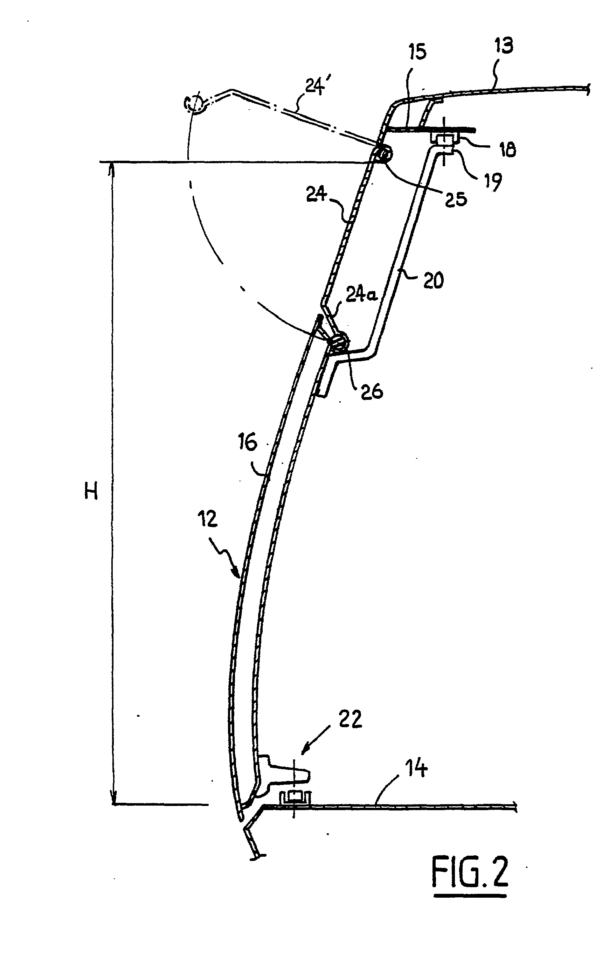

Sur la figure 2, on a représenté une partie latérale d'un véhicule utilitaire surélevé comportant un dispositif d'ouverture latérale suivant l'invention.

La paroi latérale désignée de manière générale par le repère 12 est surmontée par un pavillon de grande hauteur 13 et présente, sur une partie de sa longueur, une ouverture s'étendant verticalement sur une hauteur H entre le plancher 14 du véhicule et la partie supérieure du pavillon 13, au niveau de laquelle est fixée une structure supérieure 15 de direction longitudinale, en saillie vers l'intérieur du véhicule.

Le dispositif d'ouverture comporte une porte coulissante 16 de dimensions standard qui peut être identique à la porte coulissante 5 du dispositif selon l'art antérieur représenté sur la figure 1.

Selon l'invention, le rail supérieur de guidage 18 de la porte coulissante 16 est fixé sur le véhicule à la partie supérieure du pavillon 13, sur la structure 15. Un dispositif de guidage à galets 19 est engagé dans le rail 18. Le dispositif 19 est fixé à l'extrémité supérieure d'un support 20 dont l'extrémité inférieure est solidaire de la porte 16. Le support 20 est placé dans une position faiblement inclinée par rapport à la verticale et sensiblement parallèle à la partie supérieure de la paroi latérale 12. Le support 20 présente une forme permettant son montage dans une position adjacente par rapport à la paroi 12 légèrement décalée vers l'intérieur du véhicule.

La porte 16 présente un ensemble de support et de guidage inférieur 22 analogue au dispositif correspondant de la porte 5 qui a été décrit plus haut. Enfin, la porte coulissante 16 présente également un dispositif de guidage intermédiare fixé sur le panneau arrière de la paroi latérale 12 (non représenté sur la figure 2).

L'ouverture de hauteur H dans la paroi latérale 12 est constituée dans sa partie supérieure par une découpe dans la paroi du pavillon 13 située au-dessus du bord supérieur de la porte coulissante 16 dans sa position de fermeture.

De façon à masquer cette partie de l'ouverture pour assurer la fermeture complète de la paroi latérale du véhicule, on utilise un volet pivotant 24 articulé autour d'un axe horizontal 25 sur la structure 15 fixée à la partie supérieure du pavillon 13. Le volet 24 présente une longueur et une hauteur suffisantes pour recouvrir la partie de l'ouverture de la paroi latérale située au-dessus de la porte coulissante 16. L'axe d'articulation 25 est situé dans le plan du volet 24, au voisinage de l'un de ses bords et permet de placer le volet 24 soit dans une position de fermeture où le volet 24 est dans le plan de la paroi latérale 12, soit dans une position d'ouverture 24' où le volet 24 est dans une position éloignée du plan de la surface latérale 12, vers l'extérieur du véhicule. Le volet 24 comporte à son extrémité une partie profilée 24a constituant un logement pour un joint d'étanchéité 26 s'étendant sur toute la longueur du bord du volet 24 opposé et parallèle à l'axe d'articulation 25. La porte coulissante 16 présente sur sa surface intérieure, au voisinage de son bord supérieur, une surface de contact sur laquelle le joint 26 peut venir en appui, dans la position de fermeture. On réalise ainsi une jonction étanche entre la partie supérieure de la porte coulissante 16 et le volet 24 assurant la fermeture de la partie complémentaire de l'ouverture latérale.

Le volet 24 est muni d'un moyen permettant de le bloquer en position d'ouverture tel qu'un compas, une charnière verrouillable ou à point dur ou un autre dispositif de blocage équivalent. Le volet 24 peut également comporter des joints d'étanchéité disposés suivant ses bords latéraux et suivant son bord supérieur, ces joints d'étanchéité étant destinés à venir s'appliquer contre des parties fixes correspondantes de la paroi latérale, dans la zone du pavillon 13.

Lorsque le dispositif est mis en position d'ouverture, la porte coulissante 16 étant déplacée latéralement et le volet 24 amené dans la position 24' par pivotement vers le haut autour de l'axe 25, l'ouverture de la paroi latérale est dégagée sur tout sa hauteur H. Ce résultat est obtenu malgré l'utilisation d'une porte coulissante 16 de dimensions standard.

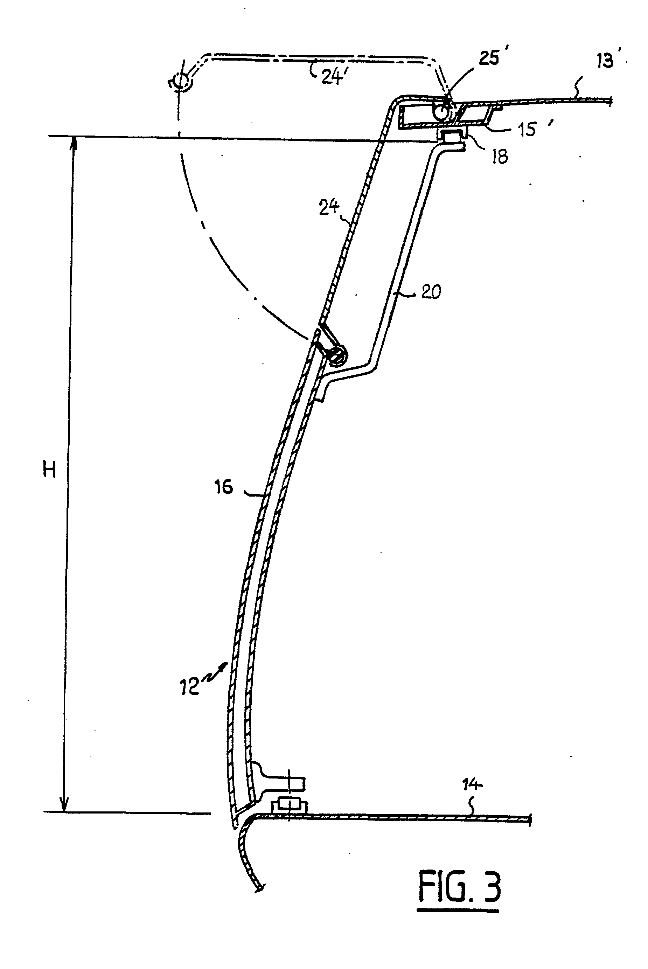

Sur la figure 3, on a représenté une variante de réalisation du dispositif d'ouverture suivant l'invention, les éléments correspondants sur les figures 2 et 3 ayant les mêmes repères.

La porte coulissante 16 et ses moyens de support et de guidage sont identiques dans les deux variantes de réalisation. Ces deux variantes diffèrent par le fait que le pavillon 13' dans la variante de la figure 3 est un pavillon surélevé comportant une partie supérieure sensiblement plane et horizontale, ce type de pavillon étant connu et généralement désigné sous l'appellation de pavillon "pagode". La structure supérieure 15' de la paroi latérale est fixée juste en-dessous de la partie supérieure plane du pavillon et l'axe d'articulation 25' du volet 24 est situé au niveau de la surface supérieure plane du pavillon 13', c'est-à-dire au niveau le plus haut du véhicule. Lorsque le volet 24 est mis dans sa position d'ouverture 24' où il est sensiblement horizontal, la porte 16 étant elle-même dans sa position d'ouverture, la paroi latérale du véhicule présente alors un passage de hauteur H maximale pour le chargement ou le déchargement de colis. Cette hauteur H correspond pratiquement à la distance entre le plancher 14 et la partie supérieure du pavillon 13'.

Il est bien évident que l'invention ne se limite pas aux modes de réalisation qui ont été décrits.

C'est ainsi qu'on peut imaginer l'utilisation d'un support 20 de forme quelconque pour la porte coulissante 16, ce support 20 pouvant comporter plusieurs parties portant chacune un ou plusieurs galets de guidage répartis suivant la longueur de la porte coulissante 16.

Le rail supérieur de guidage 18 pourra être fixé d'une manière quelconque au voisinage de la partie supérieure du pavillon, ce rail pouvant être fixé aussi bien par l'intermédiaire d'une structure de support que de manière directe sur une partie du pavillon.

Le volet pivotant pourra comporter tout type de joint destiné à venir en contact étanche avec la partie supérieure de la porte coulissante. On peut également imaginer l'utilisation de moyens de verrouillage du volet pivotant en position fermée sur la partie supérieure de la porte coulissante, d'un type quelconque. Ces moyens de verrouillage pourront éventuellement incorporer un joint d'étanchéité.

Enfin, le dispositif d'ouverture suivant l'invention s'applique à tout véhicule utilitaire comportant un pavillon surélevé.

## Revendications

1.- Dispositif d'ouverture latérale d'un véhicule utilitaire à pavillon surélevé, comportant une porte (16) montée coulissante dans une paroi latérale (12) du véhicule en-dessous du pavillon (13, 13') grâce à des moyens de roulement (19, 22) associés à des rails de guidage longitudinaux (18, 22) situés à différents niveaux suivant la hauteur du véhicule, caractérisé par le fait que le rail supérieur de guidage (18) de la porte coulissante (16) est disposé à la partie supérieure du pavillon (13, 13'), que le moyen de roulement (19) de la porte coulissante associé au rail supérieur (18) est fixé à l'extrémité supérieure d'un support (20) sensiblement vertical solidaire de la porte coulissante (16) par son extrémité inférieure et disposé de façon adjacente à la paroi latérale (12), vers l'intérieur du véhicule et que le dispositif comporte de plus un volet (24) monté pivotant sur le véhicule autour d'un axe longitudinal (25) situé dans son plan et placé à la partie supérieure du pavillon (13, 13'), susceptible d'être déplacé par pivotement entre une position de fermeture (24) où le volet se trouve dans le plan de la paroi latérale (12) entre la partie supérieure de la porte coulissante (16) et la partie supérieure du pavillon (13) et une position d'ouverture (24') où le volet (24) est écarté vers l'extérieur du plan de la paroi latérale (12) du véhicule (12).

2.- Dispositif d'ouverture suivant la revendication 1, caractérisé par le fait que le volet (24) comporte, suivant un bord opposé à l'axe d'articulation (25, 25') un joint d'étanchéité (26) susceptible de venir en contact avec la partie supérieure de la porte coulissante (16), dans la position de fermeture.

3.- Dispositif d'ouverture suivant l'une quelconque des revendications 1 et 2, caractérisé par le fait que le volet (24) comporte un dispositif de verrouillage pour son maintien en position d'ouverture.

4.- Dispositif d'ouverture suivant l'une quelconque des revendications 1 à 3, dans le cas où le pavillon (13') comporte une surface supérieure sensiblement plane et horizontale, caractérisé par le fait que l'axe de pivotement (25') du volet (24) est situé sensiblement dans le plan horizontal de la partie supérieure du pavillon (13').

5.- Dispositif d'ouverture suivant l'une quelconque des revendications 1 à 4, caractérisé par le fait que le rail supérieur (18) de la porte coulissante (16) et l'axe de pivotement (25, 25') du volet (24) sont montés sur une structure de support supérieure (15, 15') de la paroi latérale (12) fixée à un niveau de cette paroi latérale (12) correspondant sensiblement à la partie supérieure du pavillon (13, 13').

## Patentansprüche

1. Vorrichtung zum seitlichen Öffnen eines Nutzfahrzeugs mit Hochdach, die eine Tür (16) aufweist, welche durch Rollorgane (19, 22), die mit länglichen Führungsschienen (18, 22), welche in unterschiedlichen Höhen des Autos angebracht sind, verbunden sind, verschiebbar in einer Seitenwand (12) des Fahrzeugs unterhalb des Daches (13, 13') montiert ist, dadurch gekennzeichnet, daß
- die obere Führungsschiene (18) der Schiebetür (16) am oberen Teil des Daches (13, 13') angebracht ist, daß
- die Rollorgane (19) der Schiebetür, die mit der höheren Schiene (18) zusammenwirken, am oberen Ende eines Trägers (20) befestigt sind, die in etwa vertikal ist, mit seinem unteren Ende mit der Schiebetür verbunden und nahe an der Seitenwand im Inneren des Fahrzeugs angebracht ist, und daß
- die Vorrichtung zusätzlich eine Klappe (24) aufweist, die am Fahrzeug schwenkbar um eine Längsachse (25), welche am oberen Teil des Daches (13, 13') gelegen ist, angebracht ist, wobei die Klappe zum Schwenken zwischen einer geschlossenen Position (24), in der die Klappe sich in die Ebene der Seitenwand (12) zwischen dem oberen Teil der Schiebetür (16) und dem oberen Teil des Daches (13) einfügt und einer geöffneten Position (24'), in der die Klappe (24) in eine Stellung außerhalb der Ebene der Seitenwand (12) des Fahrzeugs geklappt ist, vorgesehen ist.

2. Vorrichtung zum Öffnen nach Anspruch 1, dadurch gekennzeichnet, daß die Klappe (24) längs der Kante, die der Drehachse (25, 25') gegenüberliegt, einen Fenstergummi (26) aufweist, der vorgesehen ist, um mit dem oberen Teil der Schiebetür (16) in deren geschlossener Position in Kontakt zu kommen.

3. Vorrichtung zum Öffnen nach Anspruch 1 oder 2, dadurch gekennzeichnet, daß die Klappe (24) eine Einrastvorrichtung zu ihrer Halterung in der geöffneten Position aufweist.

4. Vorrichtung zum Öffnen nach einem der Ansprüche 1 bis 3, in dem Fall, in dem das Dach (13') eine annähernd ebene und horizontale Oberfläche aufweist, dadurch gekennzeichnet, daß die Schwenkachse (25') der Klappe (24) in etwa in der horizontalen Ebene des oberen Teiles des Daches (13) gelegen ist.

5. Vorrichtung zum Öffnen nach einem der Ansprüche 1 bis 4, dadurch gekennzeichnet, daß die obere Schiene (18) der Schiebetür (16) und die Schwenkachse (25, 25') der Klappe (24) auf einer oberen Trägerstruktur (15, 15') der Seitenwand (12) montiert sind, die in einer Höhe jener Seitenwand (12) befestigt ist, die in etwa dem oberen Teil des Daches (13, 13') entspricht.

## Claims

1. Side opening device of a utility vehicle with elevated roof, the opening device comprising a door (16) mounted for sliding in a side wall (12) of the vehicle below the roof (13, 13') by means of rolling means (19,22) associated with longitudinal guide rails (18, 22) which are situated at different levels, according to the height of the vehicle, characterised in that the upper guide rail (18) of the sliding door (16) is arranged on the upper part of the roof (13, 13'), and in that the rolling means (19) of the sliding door, which is associated with the upper rail (18), is fixed to the upper end of a support (20) which is substantially vertical and is connected to the sliding door (16) by its lower end, and is arranged adjacent to the side wall (12), towards the interior of the vehicle, and in that the device further comprises a flap (24), which is mounted on the vehicle for pivoting around a longitudinal axis (25) situated in the plane of this flap (24), and which is located on the upper part of the roof (13, 13'), this flap (24) being capable of being displaced by pivoting between a closed position (24), in which the flap lies in the plane of the side wall (12), between the upper part of the sliding door (16) and the upper part of the roof (13), and an open position (24'), in which the flap (24) is moved to the side, outside the plane of the side wall (12) of the vehicle.

2. Opening device according to claim 1, characterised in that the flap (24) comprises, along an edge opposite the swivelling axis (25, 25'), a weatherstrip (26) capable of coming into contact with the upper part of the sliding door (16), in the closed position.

3. Opening device according to one of claims 1 and 2, characterised in that the flap (24) comprises a locking device for keeping it in the open position.

4. Opening device according to any one of claims 1 to 3, in case of the roof (13') comprising an upper surface which is substantially planar and horizontal, characterised in that the pivoting axis (25') of the flap (24) is situated substantially in the horizontal plane of the upper part of the roof (13').

5. Opening device according to any one of claims 1 to 4, characterised in that the upper rail (18) of the sliding door (16) and the pivoting axis (25, 25') of the flap (24) are mounted on an upper support structure (15, 15') of the side wall (12), which upper support structure (15, 15') is fixed at a level of this side wall (12) corresponding substantially to the upper part of the roof (13, 13').

FIG.1

FIG.2

FIG. 3